# EUROPEAN PATENT APPLICATION

(11) **EP 4 406 879 A1**
(43) Date of publication of application: **31.07.2024**
(21) Application number: 22872663.4
(22) Date of filing: 31.08.2022
(51) Int. Cl.: B65G 1/00, B65G 1/10, B65G 1/137

(54) **SHELF PROCESSING SYSTEM, SHELF TRANSPORT CONTROL SYSTEM, AND SHELF TRANSPORT CONTROL METHOD**

(30) Priority: 24.09.2021 JP 2021155113
(71) Applicant: Kabushiki Kaisha Toshiba, Tokyo 105-0023 (JP); Toshiba Infrastructure Systems & Solutions Corporation, Kawasaki-shi, Kanagawa 212-0013 (JP)
(72) Inventor: HORIUCHI, Haruhiko, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/032846
(87) International publication number: WO 2023/047907

(57) **Abstract**

A rack processing system according to an embodiment includes an importer, a rack conveyor, a retrieving device, a container conveyor, and a returning device. The importer is configured to import a conveyance rack having a plurality of storage sections that is conveyed by one or more carriers configured to convey the conveyance rack. The rack conveyor is configured to convey the conveyance rack imported by the importer. The retrieving device is configured to retrieve a container from a storage section of the conveyance rack imported by the importer. The container conveyor is configured to convey the container retrieved by the retrieving device. The returning device is configured to return the container to the conveyance rack conveyed by the conveyor.

## Description

### FIELD

Embodiments of the invention disclosed herein relate generally to a rack processing system, a rack conveyance control system, and a rack conveyance control method.

### BACKGROUND

With the recent increase in the efficiency in the distribution of goods, various systems using a self-propelled carrier called an automated guided vehicle (AGV) have been proposed. A carrier conveys a conveyance rack that stores articles such as packages from a warehouse to a designated position based on an instruction from a host server. A person in charge picks a target article from the conveyance rack conveyed to the designated position.

### CITATION LIST

### PATENT LITERATURE

Patent Literature 1: Japanese Patent No. 4423616

### SUMMARY

### TECHNICAL PROBLEM

The self-propelled carrier described above reduces the workload of conveying a conveyance rack. However, some improvements are desired in the work of picking a target article from a conveyance rack conveyed by a carrier.

For example, there is a waiting time until a conveyance rack is conveyed to a work place of a picking worker, and shortening this waiting time is desired. Also, when picking an article from a container in an upper stage (especially, a high stage) of a conveyance rack, the worker climbs up a ladder (steps), and when picking an article from a container in a lower stage (especially, a low stage) of a conveyance rack, the worker takes a stooped posture. Such actions cause a heavy burden, and reduction of the burden is desired.

In addition, the carrier is in a standby state while the worker is picking an article; thus, the improvement of the efficiency in the operation of the carrier is also desired.

An object of the invention disclosed herein is to provide a rack processing system, a rack conveyance control system, and a rack conveyance control method that can improve the efficiency in the rack processing and reduce the burden on a person in charge.

### SOLUTION TO PROBLEM

A rack processing system according to an embodiment includes an importer, a rack conveyor, a retrieving device, a container conveyor, and a returning device. The importer is configured to import a conveyance rack having a plurality of storage sections that is conveyed by one or more carriers configured to convey the conveyance rack. The rack conveyor is configured to convey the conveyance rack imported by the importer. The retrieving device is configured to retrieve a container from a storage section of the conveyance rack imported by the importer. The container conveyor is configured to convey the container retrieved by the retrieving device. The returning device is configured to return the container to the conveyance rack conveyed by the conveyor.

### BRIEF DESCRIPTION OF THE DRAWINGS

FIG. 1 is a schematic view showing an overall image of a rack processing system according to an embodiment.
FIG. 2 is a schematic view showing a system configuration of the rack processing system according to an embodiment.
FIG. 3 is a schematic view showing an example of a picking station system according to an embodiment.
FIG. 4 is a side view showing a retrieving device (or a returning device) and a conveyance rack of the rack processing system according to an embodiment.
FIG. 5 is a rear view showing the retrieving device (or the returning device) according to an embodiment.
FIG. 6 is a perspective view showing the retrieving device (or the returning device) according to an embodiment.
FIG. 7 is a cross-sectional view showing a configuration of the conveyance rack according to an embodiment.
FIG. 8 is a front view showing a configuration of the conveyance rack according to an embodiment.
FIG. 9 is a flowchart showing an example of control of the carry-out of a conveyance rack executed by a warehouse control system according to an embodiment.
FIG. 10 is a flowchart showing an example of control of the carry-back of a conveyance rack executed by the warehouse control system according to an embodiment.
FIG. 11 is a flowchart showing an example of control of the import and export of a conveyance rack executed by the warehouse control system according to an embodiment.
FIG. 12 is a flowchart showing an example of control of the storage and retrieval of a container executed by a warehouse execution system according to an embodiment.

### DETAILED DESCRIPTION

Hereinafter, an example of a rack processing system according to an embodiment will be described with reference to the drawings.

### [Configuration]

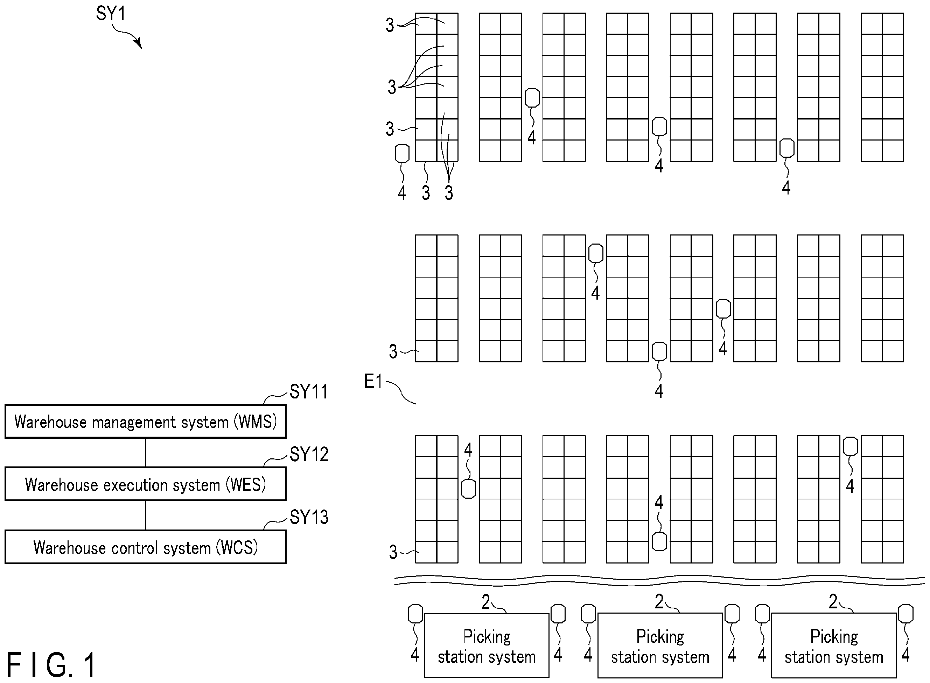

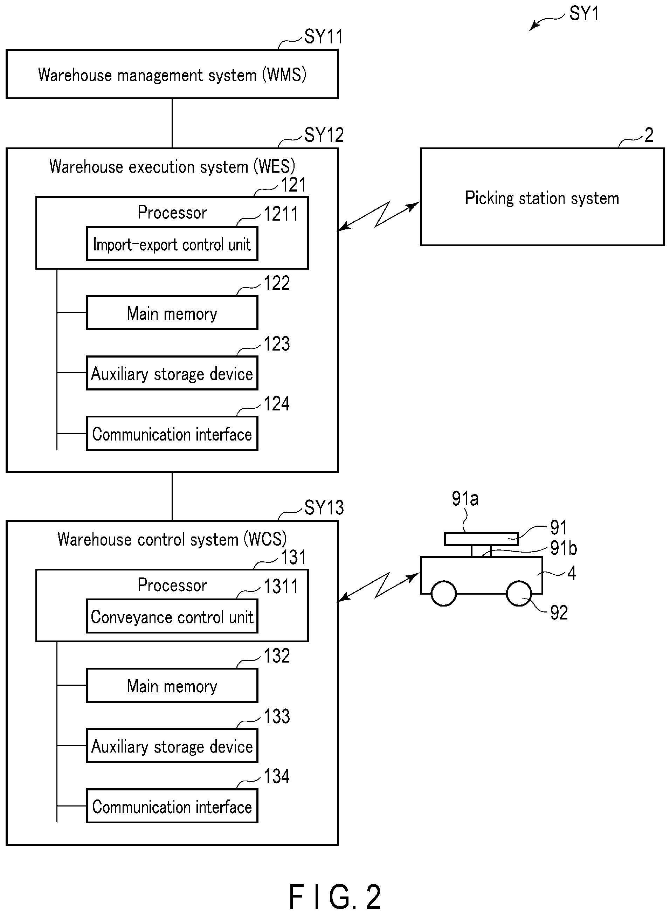

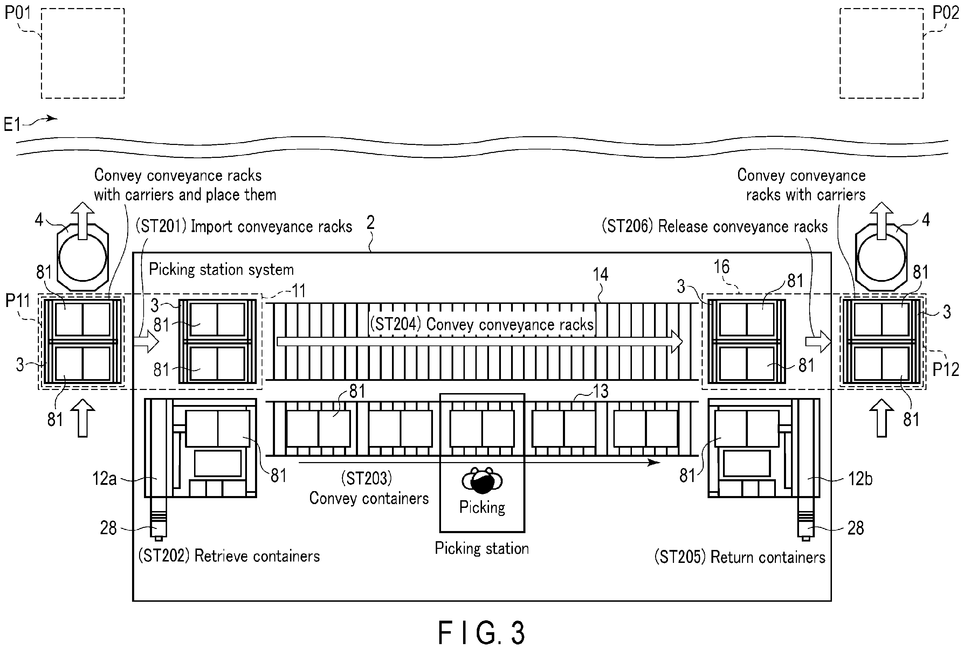

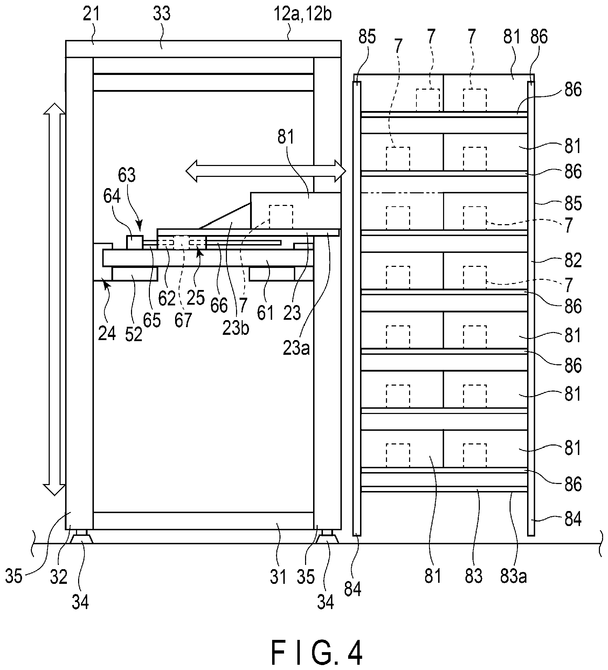

FIG. 1 is a schematic view showing an overall image of a rack processing system SY1 according to an embodiment. FIG. 2 is a schematic view showing a system configuration of the rack processing system SY1 according to an embodiment. FIG. 3 is a schematic view showing an example of a picking station system 2 according to an embodiment. FIG. 4 is a side view showing a retrieving device 12a (or a returning device 12b) and a conveyance rack 3 of the rack processing system SY1 according to an embodiment. The retrieving device 12a and the returning device 12b are substantially the same. The side view is a view seen from the side with respect to a direction in which a container 81 is retrieved (or a direction in which the container 81 is returned) by the retrieving device 12a (or the returning device 12b).

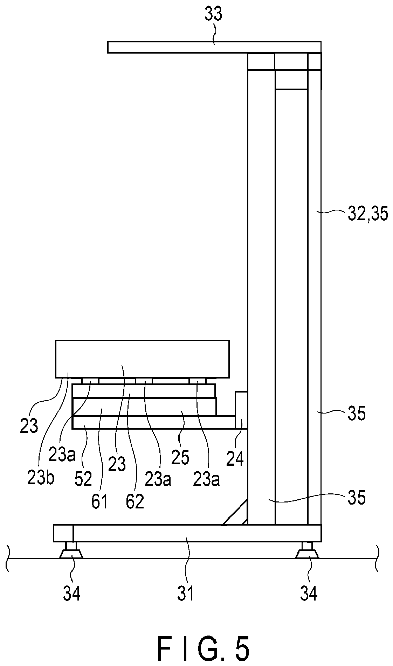

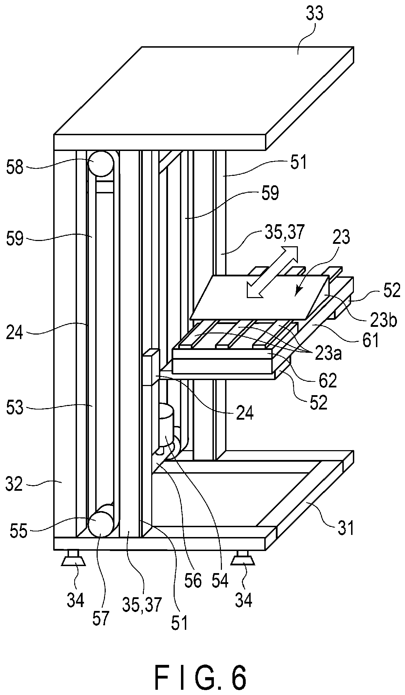

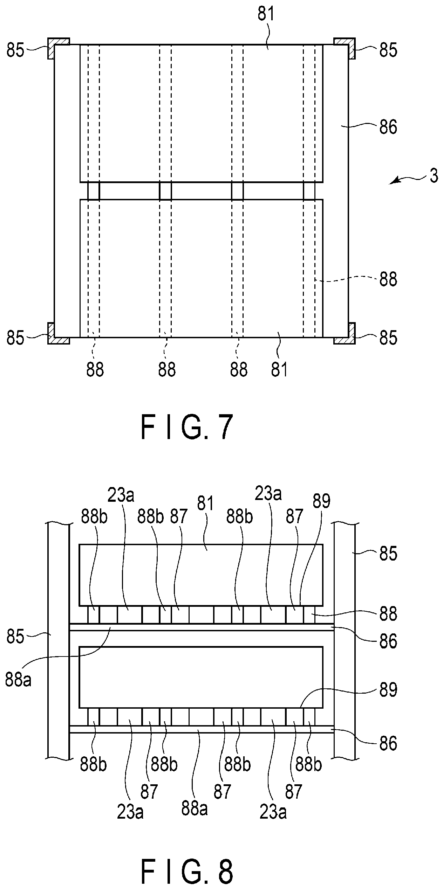

FIG. 5 is a rear view showing the retrieving device 12a (or the returning device 12b) according to an embodiment. The rear view of the retrieving device 12a (or the returning device 12b) is a rear view when a direction from a moving device 25 of the retrieving device 12a (or the returning device 12b) toward the conveyance rack 3 is a front direction. FIG. 6 is a perspective view showing the retrieving device 12a (or the returning device 12b) according to an embodiment. FIG. 7 is a cross-sectional view showing a configuration of the conveyance rack 3 according to an embodiment. The cross-sectional view of the conveyance rack 3 is a cross-sectional view of the conveyance rack 3 taken along a cutting plane orthogonal to the vertical direction between two rack plates 86 arranged in the vertical direction. FIG. 8 is a front view showing the conveyance rack 3 according to an embodiment.

As shown in FIGS. 1 and 2, the rack processing system SY1 includes a warehouse management system (WMS) SY11, a warehouse execution system (WES) SY12, and a warehouse control system (WCS) SY13. The warehouse management system SY11, the warehouse execution system SY12, and the warehouse control system SY13 correspond to a rack conveyance control system.

The rack processing system SY1 includes a plurality of picking station systems 2, a plurality of conveyance racks 3, and a plurality of carriers 4. The picking station systems 2 are an example of a container processing system that retrieves containers 81 from the conveyance racks 3 that are sequentially imported, conveys the plurality of conveyance racks 3 and the plurality of containers 81 separately, returns the containers 81 to the conveyance racks 3, and releases the conveyance racks 3 that store the containers 81.

The conveyance racks 3 arranged in a rack storage area E1 each have a plurality of storage sections having different heights in the vertical direction, and one or more containers can be stored in each storage section. Each container can store an article(s).

The warehouse management system SY11, the warehouse execution system SY12, and the warehouse control system SY13 can be realized by one or more computers. The warehouse management system SY11, the warehouse execution system SY12, and the warehouse control system SY13 are connected to each other.

The warehouse management system SY11 is connected to a host server and receives an order from the host server. The warehouse execution system SY12 corresponds to, for example, a first control device, manages the warehousing and dispatching of the conveyance racks, containers, and articles 7 based on the order, and controls the warehousing and dispatching of them. The warehouse control system SY13 corresponds to, for example, a second control device, and controls, based on the order, the warehousing and dispatching of the conveyance racks, containers, and articles 7 as well as the conveyance by the carriers.

The warehouse management system SY11 stores warehouse management information. The warehouse management information includes, for example, article information relating to the articles 7 such as packages, rack information relating to the conveyance racks 3 that convey the containers, container information relating to the containers 81 that contain the articles 7, carrier information relating to the carriers 4, and map data of the entire rack processing system SY1.

In accordance with the control executed by the warehouse control system SY13, one carrier 4 selected from the plurality of carriers 4 moves one conveyance rack 3 selected from the plurality of conveyance racks 3 to the picking station system 2, the picking station system 2 retrieves the containers 81 containing the articles 7 from the conveyance rack 3 using the retrieving device 12a, the articles 7 contained in the containers 81 are retrieved by a deployed picking worker, and the retrieved articles 7 are stored in predetermined sorting boxes. A picking robot system may be used instead of or together with a picking worker. A picking robot system can be used for the purpose of, for example, moving the articles 7 stored in the plurality of conveyance racks 3 to the sorting boxes corresponding to the articles 7.

For example, the warehouse execution system SY12 includes a processor 121, a main memory 122, an auxiliary storage device 123, and a communication interface 124.

The processor 121 is a central processing unit (CPU) or the like, and serves as a central part of a computer that performs calculation or the like necessary for various processes. The processor 121 implements the functions of an import-export control unit 1211 by executing a program stored in the auxiliary storage device 123 or the like. The import-export control unit 1211 may be implemented by hardware such as a large scale integration (LSI), an application specific integrated circuit (ASIC), and a field-programmable gate array (FPGA) having the same function as the processor 121 executing the program.

The import-export control unit 1211 controls the import and export and the conveyance of the conveyance racks 3 and the storage and retrieval and the conveyance of the containers 81 that are performed by the picking station systems 2. That is, the import-export control unit 1211 outputs, to the picking station systems 2, an import-export control signal for causing the picking station systems 2 to import the conveyance racks 3 conveyed to and placed at a first designated position, retrieve the containers from the storage sections of the imported conveyance racks 3, convey the plurality of conveyance racks 3 and the plurality of containers 81 separately, return the containers 81 to the storage sections of the conveyed conveyance racks 3, and release the conveyance racks 3 to which the containers 81 have been returned. Based on the import-export control signal from the import-export control unit 1211, the picking station systems 2 import the conveyance racks 3 conveyed by the carriers 4, retrieve the containers 81 from the storage sections of the imported conveyance racks 3, convey the plurality of conveyance racks 3 and the plurality of containers 81 separately, return the conveyed containers 81 to the storage sections of the conveyed conveyance racks 3, and release the conveyance racks 3 storing the containers 81.

The main memory 122 is a memory for data read and data write. The main memory 122 is used as a so-called work area or the like in which data that the processor 121 temporarily uses when performing various processes is stored.

The auxiliary storage device 123 is a non-transitory computer-readable storage medium and stores the aforementioned program. The auxiliary storage device 123 stores, for example, data for use by the processor 121 to perform various processes or various setting values. The warehouse execution system SY12 may be transferred in a state in which the program is stored in the auxiliary storage device 123, or the warehouse execution system SY12 may be transferred in a state in which the program is not stored. In the latter case, the warehouse execution system SY12 reads the program stored in a removable storage medium such as an optical disk or a semiconductor memory, and writes the read program in the auxiliary storage device 123. Alternatively, the warehouse execution system SY12 downloads the program via a network or the like and writes the downloaded program in the auxiliary storage device 123.

The auxiliary storage device 123 stores some or all of the pieces of warehouse management information transmitted from the warehouse management system SY11. The warehouse management information includes, for example, article information relating to articles such as the articles 7, rack information relating to the conveyance racks 3 that convey the containers, container information relating to the containers 81 that contain the articles 7, carrier information relating to the carriers 4, and map data of the entire rack processing system SY1.

The article information includes an article ID (identification information) and the like, and the article ID is assigned to each article. The rack information includes a rack ID, a storage section ID, and the like. The rack ID is assigned to each conveyance rack 3, the storage section ID is assigned to each storage section, and a container ID of each container 81 being stored is associated with the storage section ID. That is, the rack information indicates which container 81 is stored in which storage section of which conveyance rack 3. The container information includes a container ID, an article ID, and the like, and the container ID is assigned to each container 81. That is, the container information indicates which container 81 stores which article 7. The carrier information includes a carrier ID and the like, and the carrier ID is assigned to each carrier 4. Further, the map data includes three-dimensional positional information of the entire rack processing system SY1, and includes the IDs of the conveyance racks 3 associated with the positional information. That is, the map data indicates which conveyance rack 3 is located where.

The communication interface 124 receives an order transmitted from the warehouse management system SY11. The communication interface 124 outputs various instructions to the picking station systems 2.

The warehouse control system SY13 includes a processor 131, a main memory 132, an auxiliary storage device 133, and a communication interface 134.

The processor 131 is a CPU or the like and serves as a central part of a computer that performs calculation and the like necessary for various processes. The processor 131 implements the functions of a conveyance control unit 1311 by executing a program stored in the auxiliary storage device 133 or the like. The conveyance control unit 1311 may be implemented by hardware such as an LSI, an ASIC, and an FPGA having the same function as the processor 131 executing the program.

The conveyance control unit 1311 controls the traveling of the carriers 4 and the lifting and lowering of the conveyance racks 3. Based on the control executed by the conveyance control unit 1311, the carriers 4 travel to a first designated position, lift the conveyance racks 3 placed at the first designated position, travel to a second designated position, and lower the conveyance racks 3 at the second designated position.

The main memory 132 is a memory for data read and data write. The main memory 132 is used as a so-called work area or the like in which data that the processor 131 temporarily uses when performing various processes is stored.

The auxiliary storage device 133 is a non-transitory computer-readable storage medium and stores the aforementioned program. The auxiliary storage device 133 stores, for example, data for use by the processor 131 to perform various processes or various setting values. The warehouse control system SY13 may be transferred in a state in which the program is stored in the auxiliary storage device 133, or the warehouse control system SY13 may be transferred in a state in which the program is not stored. In the latter case, the warehouse control system SY13 reads the program stored in a removable storage medium such as an optical disk or a semiconductor memory, and writes the read program to the auxiliary storage device 133. Alternatively, the warehouse control system SY13 downloads the program via a network or the like and writes the downloaded program in the auxiliary storage device 133.

The auxiliary storage device 133 stores some or all of the pieces of warehouse management information transmitted from the warehouse management system SY11. The details of the warehouse management information are as described above.

The communication interface 134 receives an order transmitted from the warehouse management system SY11. The communication interface 134 outputs various instructions to the picking station systems 2.

The carriers 4 are configured to be able to move the conveyance racks 3. The carriers 4 are, for example, self-propelled robots having a rack lift mechanism 91 and wheels 92.

The rack lift mechanism 91 includes a top plate 91a and a driving unit 91b for pushing up the top plate 91a. When the driving unit 91b extends upward, the driving unit 91b pushes up the top plate 91a. When the driving unit 91b contracts, the top plate 91a is lowered. When the carriers 4 get under the conveyance racks 4 and the driving units 91b push up the top plates 91a, the top plates 91a lift the conveyance racks 4. The carriers 4 can be turned on the spot by adjusting the steering angle of the wheels 92, and the top plates 91a can be turned horizontally. The orientations of the conveyance racks 4 can be changed by turning the carriers 4 (main body) (by changing the postures of the carriers 4) in a state in which the carriers 4 are lifting the conveyance racks 4. The orientations of the conveyance racks 4 can also be changed by turning the top plates 91a rather than turning the carriers 4 (main body) (rather than changing the postures of the carriers 4) in a state where the carriers 4 are lifting the conveyance racks 4.

The carriers 4 move to a collection position corresponding to target conveyance racks 3 (for example, directly below the conveyance racks 3) based on the control signal from the conveyance control unit 1311, collect the target conveyance racks 3 at the collection position, and travel toward a position where the conveyance racks 3 are to be arranged. Based on the control signal from the conveyance control unit 1311, the carriers 4 arrange the target conveyance racks 3 in the position where the target conveyance racks 3 are to be arranged.

As shown in FIG. 3, the picking station system 2 includes, for example, an import mechanism 11, a retrieving device 12a, a container conveyor 13, a rack conveyor 14, a returning device 12b, and a release mechanism 16. The picking station system 2 is configured by installing the import mechanism 11, the retrieving device 12a, the container conveyor 13, the rack conveyor 14, the returning device 12b, and the release mechanism 16 in a predetermined area on a floor of a warehouse or the like.

The carriers 4 convey designated conveyance racks 3 from the rack storage area E1 to a designated position P11 (first designated position). The carriers 4 can access the designated position P11 from a designated direction (any designated direction among the upper direction, the lower direction, the left direction, and the right direction in FIG. 3). In addition, the carriers 4 change the orientations of the conveyance racks 3 to a designated direction by turning the carriers 4 (main body) themselves or turning the top plates 91a in a state where the conveyance racks 4 are lifted in the designated position P11, and then lower the conveyance racks 3 with their orientations changed in the designated position P11. This makes it possible to easily retrieve and store not only the containers 81 on the front side of the conveyance racks 3 but also the containers 81 on the back side of the conveyance racks 3.

The import mechanism 11 functions as an importer and sequentially imports the conveyance racks 3 conveyed to the designated position P11 by the carriers 4. The retrieving device 12a sequentially retrieves designated containers 81 from designated storage sections of the plurality of conveyance racks 3 that are sequentially imported, and supplies the containers 81 to the container conveyor 13. The container conveyor 13 receives the designated containers 81 from the retrieving device 12a and conveys them. The rack conveyor 14 receives the conveyance racks 3 from the import mechanism 11 and conveys them. That is, the container conveyor 13 and the rack conveyor 14 convey the plurality of conveyance racks 3 and the plurality of containers 81 separately. The returning device 12b returns the conveyed containers 81 to the storage sections of the conveyed conveyance racks 3. The release mechanism 16 functions as a release unit and releases the conveyance racks 3 to which the containers 81 have been returned to a designated position P12 (second designated position).

The carriers 4 convey designated conveyance racks 3 from the designated position P12 to the rack storage area E1. The carriers 4 can access the designated position P12 from a designated direction (any designated direction among the upper direction, the lower direction, the left direction, and the right direction in FIG. 3). The carriers 4 can change the orientations of the conveyance racks 3 to a designated direction by turning the carriers 4 (main body) themselves or turning the top plates 91a in a state where the conveyance racks 4 are lifted in the designated position P12.

As shown in FIGS. 4 to 6, the retrieving device 12a is configured to be able to retrieve, from the conveyance racks 3, the containers 81 containing the articles 7 to be retrieved among the plurality of containers 81 in the conveyance racks 3.

The retrieving device 12a includes, for example, a housing 21, a holder 23, a lifting device 24, a moving device 25, and a retrieving device controller 28.

Examples of the vertical direction, the front-back direction, and the width direction of the retrieving device 12a will be defined here. The vertical direction is set with the gravity direction as the downward direction, the front-back direction is set with the direction orthogonal to the vertical direction and directed from the retrieving device 12a to the conveyance racks 3 as the front direction, and the direction orthogonal to both the vertical direction and the front-back direction is set as the width direction.

The housing 21 includes, for example, a bottom 31, a column 32, and a ceiling 33.

As shown in FIG. 6, the bottom 31 is formed, for example, in a rectangular frame shape. The bottom 31 is provided with, for example, a plurality of legs 34. For example, four legs 34 are provided, and each of the legs 34 is fixed to a corner of the lower surface of the bottom 31.

The column 32 is provided on the bottom 31. The column 32 includes, for example, four column members 35. The two column members 35 are fixed to, for example, a pair of adjacent corners of the bottom 31. The remaining two column members 35 are fixed to, for example, a corner side to which the column members 35 are fixed between the corners of the bottom 31 to which the column members 35 are fixed and the corner adjacent to the aforementioned corner.

The ceiling 33 is fixed to the upper end of the column 32. The ceiling 33 is formed, for example, in a plate shape.

The holder 23 detachably holds the containers 81. In the example of the embodiment, the holder 23 has one or more arms as shown in FIG. 6, and holds a container 81 by placing the container 81 on the arms. The holder 23 includes, for example, one or more arms 23a and a stopper 23b.

The number of arms 23a used is the number that can stably hold the lower surface of the container 81, and in the example of the embodiment, three arms are provided. The arms 23a are formed, for example, in a rod shape elongated in the front-back direction. The three arms 23a are arranged so as to be spaced apart from each other in the width direction. The upper surfaces of the arms 23a are formed, for example, in a plane, and the cross sections of the arms 23a orthogonal to the longitudinal direction are formed, for example, in a rectangular shape. Here, "the number that can stably hold" is the number that prevents the container 81 from falling off the arms 23a even when the holder 23 is lifted and lowered by the lifting device 24 and moved by the moving device 25 in a state where the container 81 is placed on the arms 23a. In the example of the embodiment, the two arms 23a on the outer side in the width direction support both ends of the lower surface of the container 81 in the width direction, and the arm 23a in the center in the width direction supports the center of the lower surface of the container 81 in the width direction.

The stopper 23b is configured to be able to come into contact with the surface of the container 81 that faces the retrieving device 12a when the holder 23 is moved forward by the moving device 25. The stopper 23b is fixed to, for example, the upper surfaces of the arms 23a. The front surface of the stopper 23b is formed, for example, in a plane orthogonal to the front-back direction.

In the holder 23 configured as described above, the portions of the arms 23a that are positioned before the stopper 23b are long enough in the front-back direction to allow the container 81 to be stably placed on the aforementioned portions positioned before the stopper 23b. Here, "long enough to allow the container 81 to be stably placed" refers to a length that prevents the container 81 from falling even when the holder 23 is moved by the lifting device 24 and the moving device 25.

The lifting device 24 is configured to be able to lift and lower the holder 23 and the moving device 25 between a position at which the holder 23 retrieves the lowermost containers 81 of the conveyance racks 3 and a position at which the holder 23 retrieves the uppermost containers 81 of the conveyance racks 3. The lifting device 24 is configured to be able to move, to a picking height, the containers 81 retrieved from the conveyance racks 3 by the holder 23 and the moving device 25. If a picking robot is adopted, the picking height is a height position at which the articles 7 are retrieved from the containers 81 by the picking robot, and is a height position set by the picking robot. If a picking worker picks the articles, the picking height is adjusted to a height position at which the picking worker can easily pick the articles. The lifting device 24 is provided in the housing 21. The lifting device 24 includes, for example, a rail 51, a lifting-lowering unit 52, and a driving unit 53.

The rail 51 supports the lifting-lowering unit 52 such that the lifting-lowering unit 52 can move in the vertical direction. The rail 51 is provided on, for example, the column 32 of the housing 21. For example, the rail 51 is provided on each of the two column members 35 arranged in the width direction.

The lifting-lowering unit 52 is supported by the rail 51 so as to be movable in the vertical direction. For example, the lifting-lowering unit 52 is provided on each of the two rails 51.

The driving unit 53 is configured to be able to move the lifting-lowering unit 52 in the vertical direction. The driving unit 53 includes, for example, a motor 54 and a transmission mechanism 55.

The motor 54 is fixed, for example, between the two column members 35 at the rear end of the bottom 31. The motor 54 is electrically connected to the retrieving device controller 28.

The transmission mechanism 55 is configured to be able to convert the rotation of the motor 54 into the vertical movement of the lifting-lowering unit 52. The transmission mechanism 55 includes, for example, a shaft 56 that is engaged with an output shaft of the motor 54 and rotates in accordance with the rotation of the output shaft, a pair of first pulleys 57, a pair of second pulleys 58, and a pair of belts 59.

The shaft 56 is rotatably supported by the bottom 31, for example, in a posture parallel to the width direction. The pair of first pulleys 57 are fixed to both ends of the shaft 56 and rotate integrally with the shaft 56. The pair of second pulleys 58 are rotatably supported by, for example, the ceiling 33. The pair of second pulleys 58 are arranged, for example, in positions facing the pair of first pulleys 57 in the vertical direction.

The pair of belts 59 are wound around the first pulleys 57 and the second pulleys 58. The pair of belts 59 are fixed to the lifting-lowering unit 52.

According to the driving unit 53 configured as described above, the pair of first pulleys 57, the pair of second pulleys 58, and the pair of belts 59 rotate in tandem with the rotation of the motor 54, whereby the holder 23 and the moving device 25 move in the vertical direction via the lifting-lowering unit 52 fixed to the pair of belts 59.

The moving device 25 moves the holder 23 in a uniaxial direction that intersects the vertical direction. In the example of the embodiment, the moving device 25 moves the holder 23 in the front-back direction orthogonal to the vertical direction. The moving device 25 moves the holder 23 in the front-back direction between a position at which the holder 23 holds the containers 81 stored in the conveyance racks 3 and a position at which the containers 81 have been completely retrieved. The position at which the containers 81 are held is, for example, a position at which the stopper 23b comes into contact with the containers 81.

The moving device 25 includes, for example, a base 61, a moving unit 62, and a driving unit 63.

The base 61 supports the moving unit 62 such that the moving unit 62 can move in the front-back direction. The base 61 is fixed to the two lifting-lowering units 52 of the lifting device 24.

The holder 23 is fixed to the moving unit 62. The moving unit 62 is supported by the base 61 so as to be movable in the front-back direction via, for example, a transmission mechanism 65, which will be described later, of the driving unit 63. A rail for supporting the movement of the moving unit 62 in the front-back direction may be provided on the upper surface of the base 61.

The driving unit 63 includes a motor 64 and a transmission mechanism 65.

The motor 64 is provided, for example, on the base 61. The motor 64 is electrically connected to the retrieving device controller 28.

The transmission mechanism 65 is configured to be able to convert the rotation of the motor 64 into the movement of the moving unit 62 in the front-back direction. As shown in FIG. 4, the transmission mechanism 65 may be configured to include, for example, a screw 66 rotated by the motor 64 and a nut 67 provided on the moving unit 62 and screwed into the screw 66.

As another example of the transmission mechanism 65, the transmission mechanism 65 may be configured to include a belt and convert the rotation of the motor 64 into the movement of the moving unit 62 in the front-back direction using the belt. In this example, the transmission mechanism 65 includes a shaft engaged with an output shaft of the motor 64 and rotating in tandem with the rotation of the output shaft, a third pulley fixed to the shaft and rotating integrally with the shaft, a fourth pulley rotatably provided at the front end of the base 61, and a belt wound around the third pulley and the fourth pulley and fixed to the moving unit 62.

According to the transmission mechanism 65 configured as described above, the third pulley, the fourth pulley, and the belt 59 rotate in tandem with the rotation of the motor 64, whereby the moving unit 62 fixed to the pair of belts moves in the front-back direction, and the holder 23 moves in the front-back direction via the moving unit 62.

If a picking robot is adopted, a camera is provided, for example, at any position of the picking station, and is configured to be able to capture images of the inside of the containers 81 retrieved from the conveyance racks 3 by the retrieving device 12a. The camera is, for example, a camera capable of capturing an image of information that allows for detection of the positions of the articles 7 in the containers 81 at the picking station. The camera is also, for example, a camera capable of capturing an image of information that allows for detection of the shapes of the articles 7 in the containers 81 at the picking station. Alternatively, these functions may be achieved by using a plurality of cameras each having one of these functions. The camera transmits the data of the captured image to the retrieving device controller 28. The camera includes, for example, a depth camera and an RGB camera. The distances to the articles 7 in the vertical direction can be detected from the data of the image captured by the depth camera. The positions of the articles 7 in the horizontal direction can be detected from the data of the image captured by the RGB camera. The shapes of the articles 7 can also be detected by the depth camera and the RGB camera. For example, one camera is provided. The camera includes, for example, a depth camera and an RGB camera.

If a picking robot is adopted, a sensor is provided at a position corresponding to the picking robot (e.g., any position in the picking station), and is configured to be able to detect the completion of the retrieval of the articles 7 from the containers 81 by the picking robot. The sensor detects, for example, the completion of the movement of the articles 7 from the containers 81 to a retrieval-completion height by the picking robot. In the example of the embodiment, it is determined that the retrieval is completed when the articles 7 are moved to the retrieval-completion height. The retrieval-completion height is a height at which the lower ends of the articles 7 are positioned above the upper edges of the containers 81. The sensor is, for example, a laser range finder.

The retrieving device controller 28 can be realized, for example, by one computer or a combination of a plurality of computers. The retrieving device controller 28 communicates with the warehouse execution system SY12 in a wired or wireless manner. The retrieving device controller 28 controls the lifting device 24 and the moving device 25 by controlling the motor 54 of the lifting device 24 and the motor 64 of the moving device 25 based on a signal from the warehouse execution system SY12.

The retrieving device controller 28 controls the holder 23, the moving device 25, and the lifting device 24 in such a manner as to control the holder 23 to hold the containers 81, control the moving device 25 to move the holder 23 in the front-back direction, and then control the lifting device 24 to move to a predetermined height.

In the embodiment, the holder 23 holds the containers 81 by placing the containers 81 on the arms 23a. That is, in the embodiment, controlling the holder 23 to hold the containers 81 is controlling the moving device 25 and the lifting device 24 to place the containers 81 on the arms 23a. In other words, in the embodiment, the holder 23 is indirectly controlled by controlling the moving device 25 and the lifting device 24.

For example, if the holder 23 is configured to include a suction pad and suck and hold the containers 81 by generating a negative pressure in the suction pad with a pump, controlling the holder 23 is equivalent to controlling the pump. Alternatively, if the holder 23 is configured to include a pinching unit and a driving unit that drives the pinching unit and hold the containers 81 by pinching the containers 81 with the pinching unit, controlling the holder 23 is equivalent to controlling the driving unit. In this manner, if the holder 23 is configured to include a driving unit such as a motor or a pump, controlling the driving unit is equivalent to controlling the holder 23.

As shown in FIG. 3, a picking worker or a picking robot system retrieves the articles 7 from the containers 81 arranged in the picking position, and moves the retrieved articles 7 to sorting boxes corresponding to the articles 7 among the plurality of sorting boxes.

As shown in FIG. 4, the conveyance racks 3 are configured to be able to arrange the plurality of containers 81 in the vertical direction. The conveyance racks 3 are configured to be movable by the carriers 4. The conveyance racks 3 include, for example, the plurality of containers 81 and a conveyance rack main body 82 that stores the plurality of containers 81.

The plurality of containers 81 are placed on the upper surface 89 of the rack plate 86. That is, the rack plate 86 serves as a storage section for storing a container. The plurality of containers 81 are configured to be able to contain the articles 7 therein. The containers 81 are configured to allow the articles 7 to be retrieved from the upper side. The containers 81 are formed, for example, in a rectangular container shape with an open upper end.

The conveyance rack main body 82 is configured to allow the containers 81 to be stored and retrieved along the direction in which the holder 23 is moved by the moving device 25. The conveyance rack main body 82 includes, for example, a rack bottom plate 83, a leg 84, a support member 85, and a plurality of rack plates 86.

The rack bottom plate 83 forms a rack bottom 83a that comes into contact with the carriers 4. The shape of the leg 84 with respect to the rack bottom plate 83 is appropriately formed. The leg 84 extends downward from, for example, a corner of the rack bottom 83a of the rack bottom plate 83. The length of the leg 84 (the height below the rack (the height from the floor to the rack bottom 83a of the rack bottom plate 83)) is slightly larger than the minimum height of the carriers 4. That is, the leg 84 has a height that allows the carriers 4 to be arranged. The legs 84 are spaced apart from each other by a length that allows the carriers 4 to be arranged below the rack bottom plate 83 through the legs 84. Thus, the carriers 4 can pass between the legs 84 of the conveyance racks 3 and can get under the conveyance racks 3.

In the embodiment, an example will be described in which four or more legs 84 extend downward from the rack bottom 83a at the corners of the rack bottom plate 83 so that the conveyance racks 3 stably stand upright on the floor. The number of legs 84 may be three as long as the conveyance racks 3 stably stand upright on the floor. The number of legs 84 is also preferably five or more.

The support member 85 is fixed to the rack bottom plate 83, and the plurality of rack plates 86 are fixed thereto. In the embodiment, for example, four support members 85 are used. As shown in FIG. 7, the four support members 85 are provided at four corners of the rack bottom 83a. The four support members 85 are, for example, members that are formed to have an L-shape cross section and are elongated in one direction.

The space between the pair of rear support members 85 and the space between the pair of front support members 85 have a width that allows the containers 81 to pass through.

The plurality of rack plates 86 are fixed to the support member 85 in such a manner as to be spaced apart from each other in the vertical direction. The rack plates 86 have a size that allows one or more containers 81 to be placed on them. In the example of the embodiment, the rack plates 86 are formed in a rectangular plate shape having a size that allows two containers 81 to be arranged in the front-back direction. The four corners of the plurality of rack plates 86 are fixed to the four support members 85.

As shown in FIGS. 7 and 8, grooves 87 in which the arms 23a of the holder 23 can be arranged are formed in the upper surfaces 89 of the rack plates 86, and the number of grooves 87 formed is the same as the number of arms 23a. The grooves 87 are formed so as to allow the holder 23 to be inserted therein. The rear ends of the grooves 87 are open. The depth of the grooves 87 is set to be larger than the thickness of the arms 23a.

The grooves 87 have a length that allows the arms 23a to be inserted therein up to a point where the containers 81 can be stably placed on the arms 23a. For example, the grooves 87 have a length that allows the arms 23a to enter the grooves 87 until the stopper 23b comes into contact with the containers 81. The width of the grooves 87 is set to be larger than the width of the arms 23a. The width of the grooves 87 has a movement margin that allows the holder 23 to move in the width direction in a state where all the arms 23a are inserted into all the grooves 87.

The grooves 87 configured in this manner may be formed, for example, by fixing a plurality of rod members 88b to a plate member 88a. Alternatively, the grooves 87 may be formed, for example, by cutting the upper surface 89 of the rack plate 86.

Next, the operation of the rack processing system SY1 will be described.

The warehouse management system SY11 receives an order from the host server and notifies the warehouse execution system SY12 of the order. The warehouse execution system SY12 manages the warehousing and dispatching of the conveyance racks, containers, and articles based on the order, and controls the warehousing and dispatching thereof. The warehouse control system SY13 controls the warehousing and dispatching of the conveyance racks, containers, and articles based on the order.

### [Control of Carry-out of Conveyance Racks]

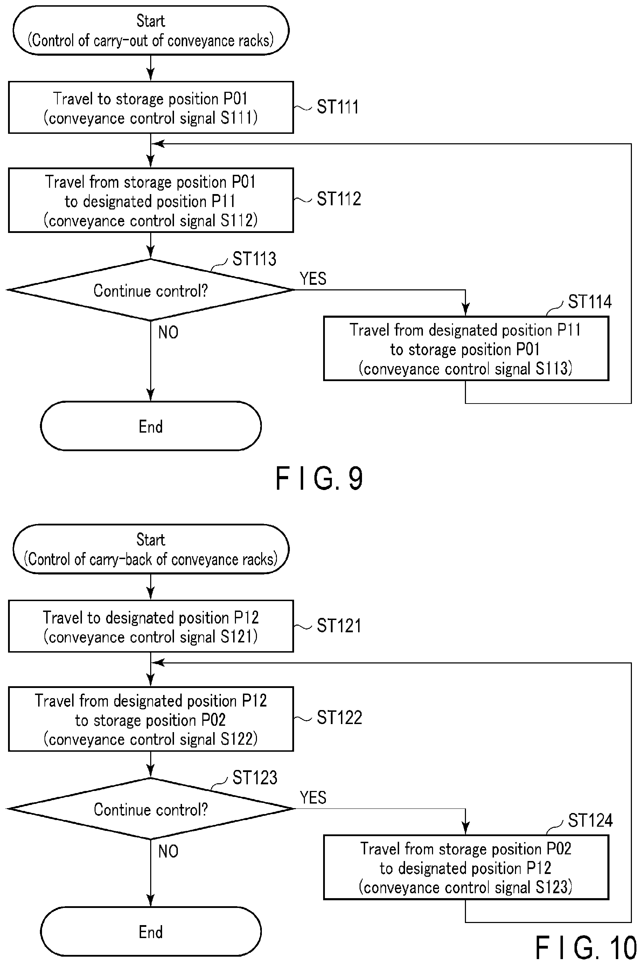

FIG. 9 is a flowchart showing an example of control of the carry-out of the conveyance racks 3 executed by the warehouse control system SY13 according to an embodiment.

As shown in FIG. 9, in order to carry out a designated conveyance rack 3 from the rack storage area E1, the conveyance control unit 1311 of the processor 131 outputs a conveyance control signal 5111 for causing a carrier 4 to travel to a storage position P01 of the designated conveyance rack 3 in the rack storage area E1 (ST111). The communication interface 134 transmits the conveyance control signal 5111 to the carrier 4. Based on the conveyance control signal Sill, the carrier 4 travels to the storage position P01 corresponding to the designated conveyance rack 3 in the rack storage area E1, stops, and lifts the designated conveyance rack 3 to make the designated conveyance rack 3 movable.

Subsequently, the conveyance control unit 1311 outputs a conveyance control signal S112 (first conveyance control signal) for causing the carrier 4 that has lifted the designated conveyance rack 3 to travel from the storage position P01 of the designated conveyance rack 3 in the rack storage area E1 to the designated position P11 (ST112). The communication interface 134 transmits the conveyance control signal S112 to the carrier 4. Based on the conveyance control signal S112, the carrier 4 travels from the position of the designated conveyance rack 3 in the rack storage area E1 to the designated position P11, stops, and lowers the designated conveyance rack 3 at the designated position P11.

If the conveyance control unit 1311 continues the conveyance control (ST113, YES), the conveyance control unit 1311 outputs a conveyance control signal S113 for causing the carrier 4 to travel from the designated position P11 to the storage position P01 of the designated conveyance rack 3 in the rack storage area E1 (ST114). The communication interface 134 transmits the conveyance control signal S113 to the carrier 4. Based on the conveyance control signal S113, the carrier 4 travels from the designated position P11 to the storage position P01 of the designated conveyance rack 3 in the rack storage area E1, stops, and lifts the designated conveyance rack 3 to make the designated conveyance rack 3 movable.

The conveyance control unit 1311 outputs the conveyance control signal S112 for causing the carrier 4 that has lifted the designated conveyance rack 3 to travel from the storage position P01 of the designated conveyance rack 3 in the rack storage area E1 to the designated position P11 (ST112). The communication interface 134 transmits the conveyance control signal S112 to the carrier 4. Based on the conveyance control signal S112, the carrier 4 travels from the position of the designated conveyance rack 3 in the rack storage area E1 to the designated position P11, stops, and lowers the designated conveyance rack 3 at the designated position P11.

If the conveyance control unit 1311 does not continue the conveyance control (ST113, NO), the process is terminated. In this manner, a predetermined carrier 4 repeatedly carries out a designated conveyance rack 3 from the rack storage area E1.

### [Control of Carry-back of Conveyance Racks]

FIG. 10 is a flowchart showing an example of control of the carry-back of the conveyance racks 3 executed by the warehouse control system SY13 according to an embodiment.

As shown in FIG. 10, in order to carry back a designated conveyance rack 3 from the rack storage area E1, the conveyance control unit 1311 of the processor 131 outputs a conveyance control signal S121 for causing a carrier 4 to travel to the designated position P12 (ST121). The communication interface 134 transmits the conveyance control signal S121 to the carrier 4. Based on the conveyance control signal S121, the carrier 4 travels to the position corresponding to the designated conveyance rack 3 in the designated position P12, stops, and lifts the designated conveyance rack 3 to make the designated conveyance rack 3 movable.

Subsequently, the conveyance control unit 1311 outputs a conveyance control signal S122 (second conveyance control signal) for causing the carrier 4 that has lifted the designated conveyance rack 3 to travel from the position corresponding to the designated conveyance rack 3 in the designated position P12 to a storage position P02 of the designated conveyance rack 3 in the rack storage area E1 (ST122). The communication interface 134 transmits the conveyance control signal S122 to the carrier 4. Based on the conveyance control signal S122, the carrier 4 travels from the position corresponding to the designated conveyance rack 3 in the designated position P12 to the storage position P02 of the designated conveyance rack 3 in the rack storage area E1, stops, and lowers the designated conveyance rack 3 in the storage position P02.

If the conveyance control unit 1311 continues the conveyance control (ST123, YES), the conveyance control unit 1311 outputs a conveyance control signal S123 for causing the carrier 4 to travel from the storage position P02 to the position corresponding to the designated conveyance rack 3 in the designated position P12 (ST124). The communication interface 134 transmits the conveyance control signal S123 to the carrier 4. Based on the conveyance control signal S123, the carrier 4 travels from the storage position P02 to the position corresponding to the designated conveyance rack 3 in the designated position P12, stops, and lifts the designated conveyance rack 3 to make the designated conveyance rack 3 movable.

The conveyance control unit 1311 outputs a conveyance control signal S122 for causing the carrier 4 that has lifted the designated conveyance rack 3 to travel from the position corresponding to the designated conveyance rack 3 in the designated position P12 to the storage position P02 of the designated conveyance rack 3 in the rack storage area E1 (ST122). The communication interface 134 transmits the conveyance control signal S122 to the carrier 4. Based on the conveyance control signal S122, the carrier 4 travels from the position corresponding to the designated conveyance rack 3 in the designated position P12 to the storage position P02 of the designated conveyance rack 3 in the rack storage area E1, stops, and lowers the designated conveyance rack 3 in the storage position P02.

If the conveyance control unit 1311 does not continue the conveyance control (ST123, NO), the process is terminated. In this manner, a predetermined carrier 4 repeatedly carries back a designated conveyance rack 3 to the rack storage area E1.

For example, in a case where the storage locations of the conveyance racks 3 to be carried out differ from the storage locations of the conveyance racks 3 to be carried back, using the carriers 4 specialized for carry-out as shown in FIG. 9 and the carriers 4 specialized for carry-back as shown in FIG. 10 can improve the efficiency in conveying the conveyance racks 3.

### [Control of Import and Export of Conveyance Racks]

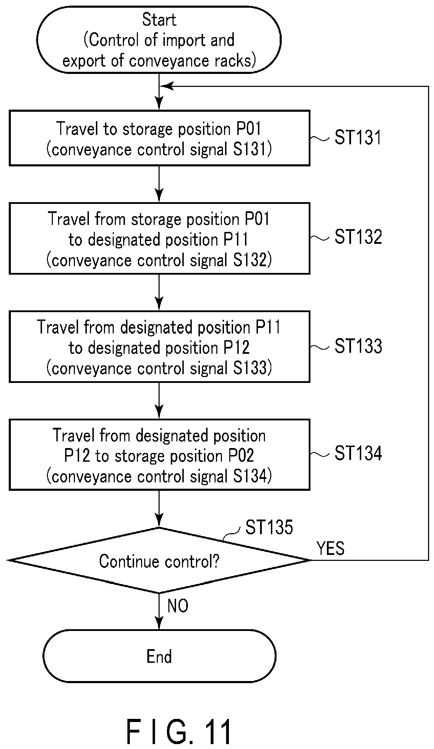

FIG. 11 is a flowchart showing an example of control of the import and export of the conveyance racks 3 executed by the warehouse control system SY13 according to an embodiment.

As shown in FIG. 11, the conveyance control unit 1311 outputs a conveyance control signal S131 for causing a carrier 4 to travel to the storage position P01 of a designated conveyance rack 3 in the rack storage area E1 (ST131). The communication interface 134 transmits the conveyance control signal S131 to the carrier 4. Based on the conveyance control signal S131, the carrier 4 travels to the storage position P01 corresponding to the designated conveyance rack 3 in the rack storage area E1, stops, and lifts the designated conveyance rack 3 to make the designated conveyance rack 3 movable.

Subsequently, the conveyance control unit 1311 outputs a conveyance control signal S132 (first conveyance control signal) for causing the carrier 4 that has lifted the designated conveyance rack 3 to travel from the storage position P01 of the designated conveyance rack 3 in the rack storage area E1 to the designated position P11 (ST132). The communication interface 134 transmits the conveyance control signal S132 to the carrier 4. Based on the conveyance control signal S132, the carrier 4 travels from the position of the designated conveyance rack 3 in the rack storage area E1 to the designated position P11, stops, and lowers the designated conveyance rack 3 at the designated position P11.

Subsequently, the conveyance control unit 1311 outputs a conveyance control signal S133 for causing the carrier 4 to travel from the designated position P11 to the designated position P12 (ST133). The communication interface 134 transmits the conveyance control signal S133 to the carrier 4. Based on the conveyance control signal S133, the carrier 4 travels from the designated position P11 to the position corresponding to the designated conveyance rack 3 in the designated position P12, stops, and lifts the designated conveyance rack 3 to make the designated conveyance rack 3 movable.

Subsequently, the conveyance control unit 1311 outputs a conveyance control signal S134 (second conveyance control signal) for causing the carrier 4 that has lifted the designated conveyance rack 3 to travel from the designated position P12 to the storage position P02 of the designated conveyance rack 3 in the rack storage area E1 (ST134). The communication interface 134 transmits the conveyance control signal S134 to the carrier 4. Based on the conveyance control signal S134, the carrier 4 travels from the designated position P12 to the storage position P02 of the designated conveyance rack 3 in the rack storage area E1, stops, and lowers the designated conveyance rack 3 in the storage position P02.

If the conveyance control unit 1311 continues the conveyance control (ST135, YES), the conveyance control unit 1311 outputs a conveyance control signal S123 for causing the carrier 4 to travel from the storage position P02 to the position corresponding to the designated conveyance rack 3 in the storage position P01 (ST131). The communication interface 134 transmits the conveyance control signal S123 to the carrier 4, and if the conveyance control unit 1311 does not continue the conveyance control (ST135, NO), the process is terminated.

The designated conveyance rack 3 conveyed from the storage position P01 to the designated position P11 and the designated conveyance rack 3 conveyed from the designated position P12 to the storage position P02 may be the same rack or different racks. The storage position P01 and the storage position P02 may be the same position or different positions.

For example, in a case where the storage locations of the conveyance racks 3 to be carried out and the storage locations of the conveyance racks 3 to be carried back are the same, using the carriers 4 that are responsible for both carry-out and carry-back as shown in FIG. 11 can improve the efficiency in conveying the conveyance racks 3.

### [Control of Storage and Retrieval of Containers]

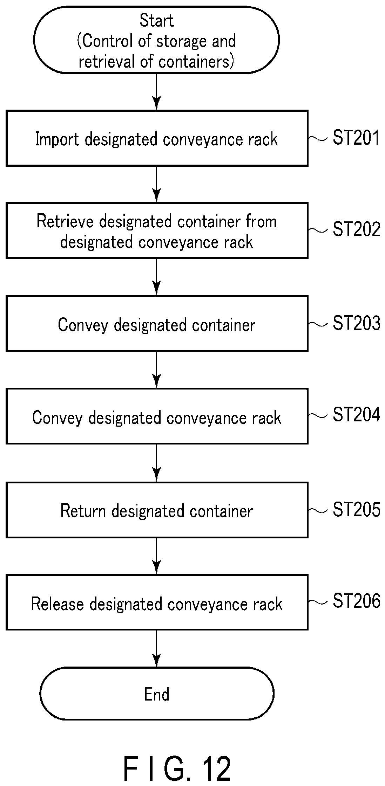

FIG. 12 is a flowchart showing an example of control of the storage and retrieval of the containers executed by the warehouse execution system SY12 according to an embodiment.

The import mechanism 11 detects a designated conveyance rack 3 placed at the designated position P11 and imports the designated conveyance rack 3 via a conveyor or the like (ST201). The import mechanism 11 imports the designated conveyance racks 3 placed at the designated position P11 one after another. The import-export control unit 1211 transmits a retrieval control signal to the picking station system 2 via the communication interface 124. The retrieving device 12a of the picking station system 2 receives the retrieval control signal from the import-export control unit 1211, and retrieves the designated containers 81 stored in the designated storage sections of the designated conveyance racks 3 based on the received retrieval control signal (ST202). The retrieving device 12a retrieves the designated containers 81 one after another from the designated conveyance racks 3 imported by the import mechanism 11.

The container conveyor 13 detects the designated containers 81 retrieved from the designated conveyance racks 3 and conveys the designated containers 81 via a conveyor or the like (ST203). The container conveyor 13 conveys a maximum of N (N ≥ 2, N: integer) designated containers 81. The rack conveyor 14 detects the designated conveyance racks 3 from which the designated containers 81 have been retrieved, and conveys the designated conveyance racks 3 via a conveyor or the like (ST204). The rack conveyor 14 conveys a maximum of M (M ≥ N ≥ 2, M: integer) conveyance racks 3.

The conveyance racks 3 have a plurality of storage sections having different heights in the vertical direction, and one or more containers can be stored in each storage section. That is, the height of the containers 81 stored in the conveyance racks 3 varies depending on the storage position. For example, the container conveyor 13 is arranged at a constant height along a picking lane. That is, the height of the containers 81 conveyed by the container conveyor 13 is constant. This constant height can reduce the burden of the picking work of the picking worker.

For example, assuming that a plurality of designated containers 81 are retrieved from one designated conveyance rack 3, the maximum number of designated containers 81 conveyed by the container conveyor 13 is set to be larger than the maximum number of designated conveyance racks 3 conveyed by the rack conveyor 14. The rack conveyor 14 conveys the plurality of conveyance racks 3 at a first conveyance speed, and the container conveyor 13 conveys the plurality of designated containers 81 at a second conveyance speed. The first conveyance speed and the second conveyance speed may be the same or different. For example, if many picking workers are deployed, the container conveyor 13 increases the second conveyance speed and conveys the designated containers 81 at a high speed through the speed setting, and conversely, if few picking workers are deployed, the container conveyor 13 decreases the second conveyance speed and conveys the designated containers 81 at a low speed through the speed setting.

The import-export control unit 1211 transmits a return control signal to the picking station system 2 via the communication interface 124. The returning device 12b of the picking station system 2 receives the return control signal from the import-export control unit 1211, and returns the designated containers 81 to the designated storage sections of the designated conveyance rack 3 based on the received return control signal (ST205). The returning device 12b receives the designated conveyance rack 3 conveyed by the rack conveyor 14, receives the designated containers 81 conveyed by the container conveyor 13, and sends the designated containers 81 to the designated storage sections of the received designated conveyance rack 3.

The release mechanism 16 detects the designated conveyance rack 3 to which the designated containers 81 have been returned, and releases the designated conveyance rack 3 to the designated position P12 via a conveyor or the like (ST206).

According to the embodiment disclosed herein, it is possible to provide a rack processing system, a rack conveyance control system, and a rack conveyance control method that can improve the efficiency in the rack processing and reduce the burden on a person in charge.

For example, the picking station system 2 can simultaneously convey a maximum of N conveyance racks 3 while conveying the conveyance racks 3 that are sequentially imported, and can simultaneously convey a maximum of M containers 81 while conveying the containers 81 that are sequentially retrieved. In other words, the picking station system 2 functions as a buffer that simultaneously holds a maximum of N conveyance racks 3, and also functions as a buffer that simultaneously holds a maximum of M containers 81. The buffer function can reduce the waiting time for the picking operation.

The picking station system 2 conveys the plurality of conveyance racks 3 at the first conveyance speed and conveys the plurality of containers 81 along the picking lane at the second conveyance speed. For example, by adjusting the second conveyance speed according to the number of picking workers deployed, an appropriate picking operation time can be secured and the waiting time for the picking operation can be reduced.

The picking station system 2 conveys, at a constant height along a picking lane, containers retrieved from designated storage sections of the conveyance rack 3 having a plurality of storage sections with different heights, that is, containers retrieved from positions at different heights. Thus, a person in charge of picking is released from the work of climbing up the ladder to pick a container from a high position or bending over to pick a container from a low position, allowing for reduction of the workload of the person in charge of picking.

In the rack processing system SY1, the processing of the conveyance racks 3 performed by the carriers 4 and the processing of the conveyance racks 3 performed by the picking station system 2 are independent of each other, whereby the carriers 4 can convey the conveyance racks 3 without being affected by the picking operation. Also, with the above-described buffer, the picking station system 2 can perform the picking operation without waiting for the conveyance racks 3 conveyed by the carriers 4, leading to improved efficiency in the operation of the entire system.

In the embodiment disclosed herein, a case where the rack processing system SY1 is applied to a picking operation (dispatching from a warehouse) performed in a picking station has been described; however, the invention is not limited thereto. The rack processing system SY1 can also be applied to a warehousing operation of putting the articles 7 into the containers 81.

While several embodiments have been described, these embodiments have been presented by way of example and are not intended to limit the scope of the invention. The novel embodiments described herein can be implemented in a variety of other forms; furthermore, various omissions, substitutions, and changes can be made without departing from the spirit of the invention. The accompanying claims and their equivalents are intended to cover such forms or modifications as would fall within the scope and spirit of the inventions.

## Claims

1. A rack processing system comprising:
an importer configured to import a conveyance rack conveyed by one or more carriers configured to convey the conveyance rack, the conveyance rack including a plurality of storage sections;
a rack conveyor configured to convey the conveyance rack imported by the importer;
a retrieving device configured to retrieve a container from a storage section of the conveyance rack imported by the importer;
a container conveyor configured to convey the container retrieved by the retrieving device; and
a returning device configured to return the container to the conveyance rack conveyed by the rack conveyor.

2. The rack processing system according to claim 1, wherein
the rack conveyor conveys a plurality of conveyance racks at a first conveyance speed, and
the container conveyor conveys a plurality of containers along a picking lane at a second conveyance speed.

3. The rack processing system according to claim 1 or 2, wherein the retrieving device retrieves a container from a designated storage section of a conveyance rack having a plurality of storage sections with different heights and supplies the container to the container conveyor.

4. The rack processing system according to any one of claims 1 to 3, comprising a control system configured to transmit a retrieval control signal for retrieving a container from a storage section of a conveyance rack to the retrieving device and transmit a return control signal for returning a container to a storage section of a conveyance rack to the returning device.

5. The rack processing system according to claim 4, wherein
the control system transmits, to the carrier, a first conveyance control signal for conveying a conveyance rack from a rack storage area to a first designated position and a second conveyance control signal for conveying a conveyance rack from a second designated position to the rack storage area, and
the rack conveyor imports a conveyance rack conveyed to the first designated position and releases the conveyance rack to the second designated position.

6. A rack conveyance control system comprising:
a first control device configured to output, to one or more carriers configured to convey a conveyance rack having a plurality of storage sections, a first conveyance control signal for causing the one or more carriers to convey a conveyance rack from a rack storage area to a first designated position and output, to the one or more carriers, a second conveyance control signal for causing the one or more carriers to convey a conveyance rack from a second designated position to the rack storage area; and
a second control device configured to output, to a container processing system, an import-export control signal for causing the container processing system to import a conveyance rack arranged at the first designated position, retrieve a container from a storage section of the imported conveyance rack, convey a plurality of conveyance racks and a plurality of containers separately, return the containers to the storage sections of the conveyed conveyance racks, and release the conveyance racks to which the containers have been returned.

7. A rack conveyance control method, comprising:
outputting, to one or more carriers configured to convey a conveyance rack having a plurality of storage sections, a first conveyance control signal for causing the one or more carriers to convey a designated conveyance rack from a rack storage area to a first designated position and outputting, to the one or more carriers, a second conveyance control signal for causing the one or more carriers to convey a designated conveyance rack from a second designated position to the rack storage area; and
outputting, to a container processing system configured to import a conveyance rack arranged at the first designated position and release the conveyance rack to the second designated position, a retrieval control signal for causing the container processing system to retrieve a designated container from a designated storage section of a designated conveyance rack and output, to the container processing system, a return control signal for causing the container processing system to return a designated container to a designated storage section of a designated conveyance rack.
